Europäisches Patentamt

(19) European Patent Office

Office européen des brevets

(11) Numéro de publication: **0 027 409**

**A1**

(12) # DEMANDE DE BREVET EUROPEEN

(21) Numéro de dépôt: 80401416.5

(22) Date de dépôt: 06.10.80

(51) Int. Cl.³: **B 60 P 1/38**

(30) Priorité: 08.10.79 FR 7925003

(43) Date de publication de la demande:
22.04.81 Bulletin 81/16

(84) Etats Contractants Désignés:
AT BE CH DE FR GB IT LI LU NL SE

(71) Demandeur: SOCIETE DES ETABLISSEMENTS
THEVENON
32 rue Abélard
F-02200 Soissons(FR)

(72) Inventeur: Thevenon, Maurice
26 Bd Jeanne d'Arc
F-02200 Soissons(FR)

(74) Mandataire: Combe, André et al,
CABINET BEAU DE LOMENIE 55 rue d'Amsterdam
F-75008 Paris(FR)

(54) **Caisses à fond mobile.**

(57) Caisse à fond mobile dont la partie inférieure des parois latérales (9) est constituée d'un plan incliné et d'une petite face verticale (10) sur laquelle est fixée une plaque mince (13) et éventuellement au moins un vérin (14) tendant à appliquer le fond mobile contre le fond de la caisse ; ledit fond mobile pouvant avantageusement être constitué par une bande transporteuse mince (12) s'enroulant autour de rouleaux (4-5) situés aux extrémités de la caisse, la fixation de ladite bande (12) sur lesdits rouleaux (4, 5) étant assurée par un dispositif ne conduisant pas à surépaisseur locale lors de l'enroulement, l'axe de chacun des rouleaux étant à une distance variable du plan du fond de la caisse (3).

./...

Fig-1

Caisses à fond mobile.

La présente invention concerne les caisses à fond mobile.

Dans les engins qui assurent le transport de marchandises, engins tels que camions, semi-remorques, remorques, bennes etc..., on a toujours rencontré des difficultés notables pour le déchargement des marchandises contenues dans les "caisses" de ces engins. Pour le transport des marchandises en vrac on a notamment préconisé l'emploi de bennes basculantes vers l'arrière ou sur le côté mais l'emploi de ces bennes basculantes entraine certaines difficultés bien connues des utilisateurs en particulier si les terrains sont de consistance inégale.

La présente invention permet de remédier à ces difficultés ; elle concerne une "caisse" dont le fond mobile permet le déchargement et le chargement de ladite caisse.

On appelle "caisse" la portion d'un engin de transport sur ou dans laquelle on admet les marchandises à transporter ; cette caisse peut être liée de façon permanente ou temporaire à l'engin de transport.

Le fond mobile des caisses selon l'invention est constitué par une bande transporteuse souple qui s'appuie sur le fond de la caisse et qui, par un déplacement longitudinal, par rapport à ce fond, permet de vider la caisse de son contenu ou de charger ladite caisse.

Les propriétés à considérer pour cette bande transporteuse sont les suivantes :

- cette bande doit être de dimensions suffisantes, c'est-à-dire d'une largeur au moins égale à la largeur utile du fond de la caisse et d'une longueur égale à au moins deux fois la longueur du fond de la caisse,

- elle doit être suffisamment résistante car, soumise, par un moteur, à un effort engendrant son déplacement, la bande devra entrainer le chargement sans se déchirer,

- elle doit présenter une surface inférieure (surface qui est en contact avec le fond de la caisse) ayant un faible coefficient de frottement.

- enfin elle peut avantageusement présenter une surface supérieure qui est adaptée au matériau à transporter ; dans certains cas cette surface doit être lisse (par exemple en matière plastique) afin d'éviter d'être souillée par le matériau remplissant la caisse ; dans d'autres cas cette surface doit être très rugueuse afin de mieux accrocher les matériaux qui s'y appuyent.

Le glissement de la bande sur le fond de la caisse sera effectué grâce à l'action d'au moins un moteur qui enroulant la bande autour d'un tambour exercera sur ladite bande l'effort de traction nécessaire. Ledit moteur devra être suffisamment puissant pour assurer le déplacement de la bande quel que soit le chargement de la caisse.

La vitesse de déplacement de la bande pourra être variable mais en général elle sera de l'ordre de 0,1 m par seconde de façon à assurer le déchargement complet d'une caisse ayant une dizaine de mètres de longueur en temps d'environ deux minutes.

Les engins de transport dont les caisses comportent des fonds mobiles tels que décrits ci-dessus ont déjà été décrits par exemple dans les brevets français 550 077 , 822 189, les brevets US 2 595 395, 3 593 864 et le brevet anglais 1 053 595. Selon ces brevets, il apparait que les bandes formant le fond mobile des caisses peuvent être déplacées soit en les enroulant alternativement autour de deux rouleaux disposés sur deux côtés opposés du fond de la caisse, soit sous forme d'une bande sans fin disposée autour de deux rouleaux.

Si le principe des véhicules présentant une caisse à fond mobile est connu, la réalisation pratique de ces caisses à fond mobile pose un certain nombre de problèmes qui doivent être convenablement résolus pour aboutir à un matériel fiable. Ces problèmes concernent d'une part, la mise en place et le maintien de la bande, d'autre part, la fixation de ladite bande lorsque celle-ci doit être "enroulée" autour de rouleaux situés aux extrémités du fond de la caisse et enfin la réalisation d'un positionnement convenable de chacun des rouleaux pour que les efforts subis par la bande, lors du déplacement de celle-ci, ne risquent pas de détériorer ladite bande.

La présente invention propose des solutions à ces divers problèmes pratiques, ces solutions permettant une réalisation pratique de véhicules de dimensions notables dont le fond est constitué par une bande mobile.

Le premier problème à résoudre consiste à aménager convenablement les parties latérales inférieures de la caisse de façon d'une part, que la position de la bande par rapport aux parois latérales de la caisse soit convenable, d'autre part, qu'il y ait une certaine étanchéité tout au long de la partie inférieure de ces parois latérales de la caisse et enfin que la bande soit maintenue "en place" quelles que soient les circonstances. Ce problème de la relation entre le positionnement de la bande et la partie inférieure des parois latérales de la caisse doit être résolu quel que soit le type de bande à savoir que la bande soit enroulée autour de rouleaux ou qu'elle soit disposée sous forme d'une bande sans fin.

Le moyen selon l'invention pour résoudre ce problème consiste en un aménagement de la partie inférieure des parois latérales de la caisse et également, de préférence, par l'emploi de vérins à action temporaire.

L'aménagement de la partie inférieure des parois latérales de la caisse est caractérisé en ce que . lesdites parois comportent une partie inférieure inclinée vers l'intérieur de la caisse et s'arrêtant à une certaine distance de la bande de façon que celle-ci déborde vers l'extérieur de la caisse, c'est-à-dire au-delà desdites parois, et que la partie inférieure desdites parois est pourvue d'une plaque mince en matière plastique résistante de préférence, cette plaque étant disposée de façon à affleurer la surface supérieure de la bande et à assurer ainsi une certaine étanchéité tout le long des parties latérales inférieures de la caisse.

Les vérins sont des dispositifs à actions mécanique , pneumatique ou hydraulique qui, disposés à la partie inférieure de chacune des parois latérales de la caisse, permettent à volonté, de façon temporaire, d'appliquer chaque bord latéral de la bande contre un support mécaniquement résistant.

Le support mécaniquement résistant contre lequel la bande mobile peut être appliquée au moyen de vérins à action temporaire, est soit le fond de la caisse, soit la partie inférieure des parois latérales de la caisse. Dans le premier cas les vérins seront disposés au-dessus du fond de la caisse et seront de préférence accrochés sur la face externe de la partie inférieure des parois latérales de la caisse. Dans le second cas les vérins pourront être disposés dans des logements (gouttières par exemple) ménagés dans le fond de la caisse.

Les vérins peuvent être de nature mécanique, hydraulique ou à pression d'air. Ils doivent pouvoir être commandés à volonté de façon à ce que leur action soit annulée lorsque la bande se déplace pour le chargement ou le déchargement de la caisse.

Selon un mode de réalisation préféré de l'invention on utilise comme vérin un tube en caoutchouc épais d'environ 3 à 4 cm de diamètre à l'état non gonflé et qui peut supporter des pressions d'air de l'ordre de 6 à 10 bars. Un tube de ce type est accroché sur la face externe de chacune des parois latérales de
la caisse, au bas desdites parois, de façon à
appuyer lorsque sur la portion de bande qui dépasse
de part et d'autre du "fond" de la caisse. Lorsque
l'on utilise ce mode de mise en oeuvre de l'invention,
ledit boudin assure avantageusement, lorsqu'il est
gonflé, l'étanchéité entre le bas des parois latérales
de la caisse et la bande mobile.

De plus, après divers essais, il a été trouvé
qu'il était plus souhaitable que la bande soit
enroulée (et déroulée) autour de deux rouleaux situés
aux extrémités de la caisse plutôt que d'utiliser
une bande sans fin disposée autour de deux rouleaux.
Cette disposition préférable de la bande est dûe au
fait que le positionnement de ladite bande peut, malgré
certaines difficultés, que la présente invention permet
de résoudre, être mieux assurer dans le cas d'une bande
enroulée que dans le cas d'une bande sans fin.

Mais cette disposition de bande enroulée implique
la résolution de problèmes liés d'une part, aux propriétés
mécaniques de cette bande, d'autre part, à la fixation de
chaque extrémité de la bande sur les rouleaux et enfin
à la propriété de la bande.

La présente invention vise à résoudre ces divers
problèmes grâce à des moyens qui peuvent avantageusement
être combinés entre eux.

Le premier moyen consiste à utiliser une bande
mince, c'est-à-dire une bande dont l'épaisseur est inférieure à environ 5 mm ; pour obtenir une résistance
mécanique suffisante, ces bandes sont réalisées avec un
tissu en fil très résistant de préférence de type
polyester et notamment polyesters aromatiques enduit
sur une face (la face qui est en contact avec le fond
de la caisse) avec un polymère à faible coefficient de
frottement tel que de chlorure de polyvinyle et sur l'autre face avec un matériau plastique, résistant notamment à l'abrasion, qui peut être soit du chlorure de polyvinyle, soit un polyuréthane.

Le positionnement convenable de la bande pour que l'enroulement s'effectue sur chaque rouleau avec recouvrement exact d'une couche sur l'autre, implique que l'on choisisse un mode de fixation convenable de chaque extrémité de la bande sur chacun des rouleaux. Ce mode de fixation doit permettre notamment une certaine "liberté" de la bande lors de sa mise en place et doit permettre d'éviter que lors de l'enroulement des surépaisseurs intempestives apparaissent sur la génératrice le long de laquelle s'effectue ladite fixation. C'est pourquoi, selon la présente invention, la bande est de préférence fixée, sur chaque rouleau de la façon suivante : on provoque tout le long d'une génératrice de chaque rouleau (ayant la forme d'un cylindre à section circulaire) un décrochement constitué d'un bord disposé selon un plan radian du cylindre et d'une partie formant rattrapage progressif avec la surface circulaire du cylindre, on dépose dans ce décrochement une contreplaque dont la face supérieure se trouvera, après mis en place de la bande, dans le prolongement de la surface circulaire du cylindre, on glisse la bande dans ce décrochement entre le rouleau et la contreplaque et on serre la bande en solidarisant, au moyen de vis par exemple, ladite contreplaque avec ledit rouleau. En fixant la bande de cette manière on constate notamment qu'il est relativement facile de positionner exactement la bande par rapport au rouleau puisque jusqu'au serrage définitif, la bande conserve une certaine liberté par rapport au rouleau et par ailleurs qu'au moment de l'enroulement de la bande autour du rouleau, il n'y a pratiquement pas apparition de variations brusques de la surface extérieure de la bande enroulée ce qui facilite les opérations notamment de nettoyage de la surface de cette bande.

Par ailleurs, la relativement faible épaisseur de la bande implique, compte tenu des efforts de traction qui devront être exercés sur cette bande au moment du déchargement (ou lors du chargement, qu'il n'y ait pas de changement de direction brusque de ladite bande lors de son trajet. C'est pourquoi, si l'on tient compte en particulier du changement continu du diamètre de chaque rouleau au fur et à mesure de l'enroulement et du déroulement de la bande sur ledit rouleau, on prévoit selon l'invention que la distance entre l'axe de chaque rouleau et le plan du fond de la caisse (plan qui détermine la position de la bande) sera variable. La réalisation de cette distance variable s'effectuera de préférence en faisant supporter l'axe de chaque rouleau par des bras pouvant pivoter autour d'axes parallèles à l'axe dudit rouleau. Quant au positionnement convenable de l'axe du rouleau par rapport au plan du fond de la caisse, il sera réalisé à chaque instant grâce à une pièce qui, disposée sous le fond de ladite caisse, viendra en contact avec la face extérieure de la bande qui sera enroulée autour du rouleau considéré.

Un autre problème à résoudre dans le cas de bandes enroulées sur des rouleaux consiste dans le nettoyage de la face inférieure des bandes, c'est-à-dire de la face de la bande qui se trouve en contact avec le fond de la caisse. Ce problème provient bien évidemment de la possibilité de salissure de cette face inférieure lors de l'enroulement de la bande. La solution utilisée selon l'invention consiste en ce qu'on ménage sur le pourtour du fond de la caisse et éventuellement sur une ou plusieurs lignes transversales à travers ladite caisse des ouvertures par lesquelles les salissures pourront s'évacuer.

Les schémas ci-joints représentent de façon non limitative les diverses solutions aux problèmes évoqués ci-dessus en vue de la réalisation d'un véhicule dont la caisse présente un fond mobile.

Les figures 1 et 2 représentent des vues en coupe longitudinale (fig. 1) et transversale (fig.2) d'une caisse comportant un fond mobile constitué par une bande enroulée autour de rouleaux.

La figure 3 représente une coupe longitudinale d'une caisse à fond mobile constitué par une bande sans fin disposée autour de deux rouleaux.

La figure 4 représente la solution selon l'invention de l'aménagement de la partie inférieure de la paroi latérale d'une caisse à fond mobile selon l'invention.

La figure 5 représente une coupe partielle montrant un mode de réalisation de la partie inférieure de la paroi latérale d'une caisse à fond mobile, ladite partie étant munie d'un vérin constitué par un tube pneumatique gonflable.

La figure 6 représente en coupe le mode préféré de fixation d'une extrémité de la bande sur un rouleau autour duquel ladite bande sera enroulée.

La figure 7 représente une coupe longitudinale schématique d'une caisse selon l'invention, l'axe des rouleaux situés aux extrémités de ladite caisse étant à une distance variable du plan du fond de la caisse.

Sur la figure schématique 1 on voit :

- en 1 une caisse pouvant être indifféremment la benne d'un camion, d'un semi-remorque ou d'une remorque ; cette caisse est essentiellement constituée par des parois sensiblement verticales (deux parois latérales, une paroi avant et une paroi arrière 2 munie de portes) et par un fond plein et plat 3.

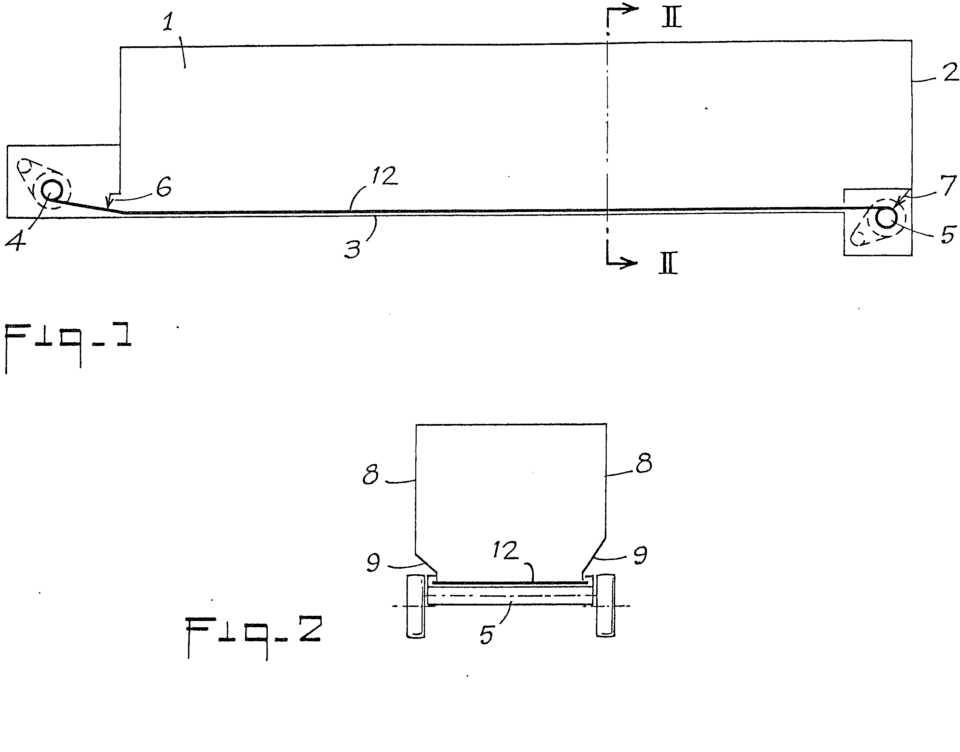

- en 4 un tambour d'enroulement ayant et en 5 un tambour d'enroulement arrière ; l'axe du tambour d'enroulement avant est, pour des raisons de commodité, situé légèrement au-dessus du plan représenté par le fond de la caisse et l'axe du tambour d'enroulement arrière est disposé légèrement en dessous dudit plan. Les deux axes des tambours 4 et 5 sont parallèles entre eux et parallèles à l'axe de l'essieu portant les roues qui soutiennent la caisse (roues non représentées sur la figure 1). Chaque tambour est de préférence accouplé à un moteur qui est susceptible d'entrainer ce tambour à une vitesse choisie, pouvant être variable.

Initialement autour du tambour 4 on enroule une bande transporteuse dont la longueur totale est d'environ trois fois la longueur totale de la caisse ; puis l'extrémité de cette bande progressivement déroulée, pénètre à l'intérieur de la caisse par une ouverture convenable ménagée au bas de la paroi verticale avant de cette caisse, glisse sur la surface supérieure du fond de la caisse et est solidement fixée au tambour 5 ; la bande est alors enroulée sur au moins un tour (tour mort) autour de ce tambour 5.

Le fonctionement de la caisse à fond mobile est le suivant :

- supposons que la caisse ait été chargée avec un matériau en vrac tel que des betteraves par exemple ; pour vider cette caisse les portes arrières seront ouvertes et le tambour 5 sera entrainé en rotation de façon à ce que la bande s'enroule autour de ce tambour ; ce déplacement de la bande entrainera progressivement hors de la caisse les betteraves initialement contenues dans cette caisse ; .

l'expérience prouve que pour un tel chargement la longueur totale de la bande soit être de préférence égale à environ trois fois la longueur de la partie utile de la caisse. A la fin de l'opération la bande sera réenroulée autour du tambour 4 par mise en marche du moteur qui commande ce tambour.

On remarquera que de même que le déplacement de la bande par enroulement autour du tambour 5 permet de vider la caisse de son contenu, de même le déplacement de la bande par enroulement autour du tambour 4 permet d'aider, dans certains cas, au chargement de la caisse. En effet, à supposer que la partie arrière de la caisse soit amenée contre un quai de chargement sur lequel sont déposés des objets à charger, on peut déposer une rangée d'objets sur la partie de la bande proche du quai puis déplacer ladite bande de façon à entrainer les objets vers l'intérieur de la caisse en laissant libre, vers l'arrière de ladite caisse, une partie déroulée de la bande.

Il est parfois utile de nettoyer la surface supérieure de la bande avant son enroulement sur elle-même autour des cylindres 4 et 5, à cet effet on dispose des racloirs qui sont fixés par exemple d'une part, sur la face extérieure de la paroi avant de la caisse (racloir représenté en 6 du tambour 5 (racloir représenté en 7 sur la figure 1).

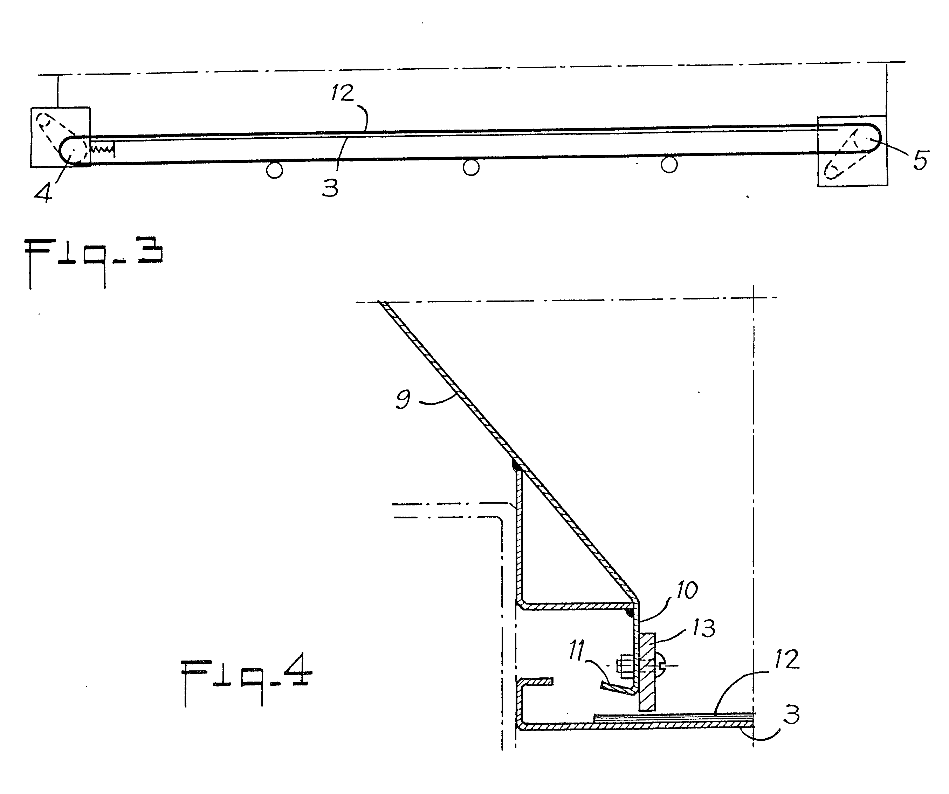

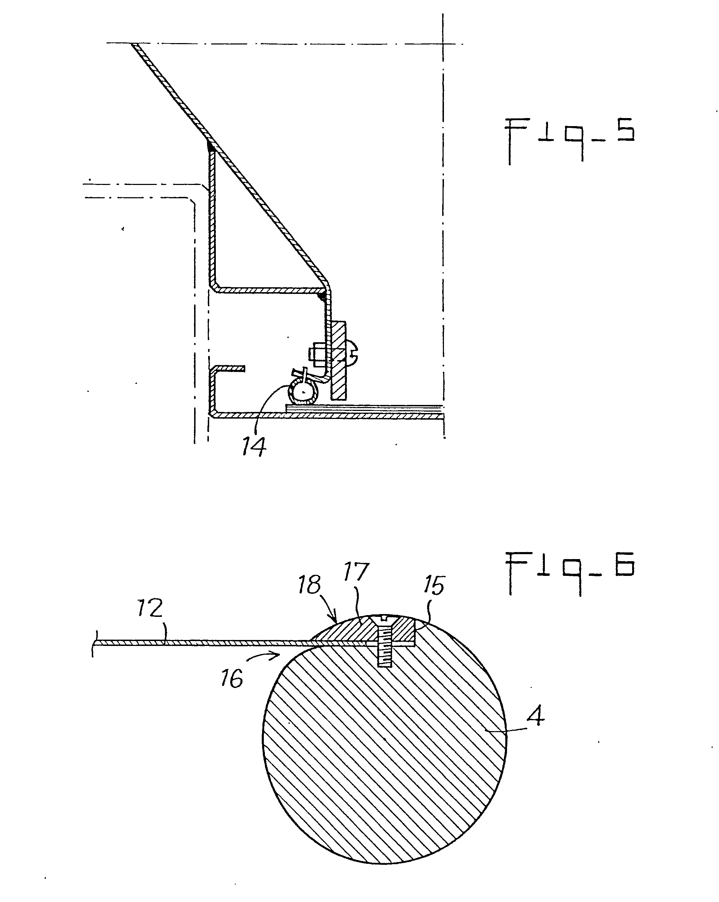

La figure 2 a été fournie pour montrer une disposition préférentielle de la caisse (parois verticales latérales). Sur cette figure schématique on retrouve le fond plat 3 de la caisse sur lequel repose la bande transporteuse ; cette bande transporteuse recouvre la totalité de la largeur utile du fond de la caisse et, comme cela sera illustré ultérieurement (fig.4), déborde légèrement de cette largeur ; faut noter que les parois verticales latérales sont formées d'une partie verticale 8 et d'une partie inclinée 9 et que les deux parois latérales ne sont pas symétriques par rapport au plan médian de la caisse, de façon à éviter la formation du phénomène de "voûte" qui risque de se produire (lors du déplacement de la bande) pour un certain nombre de matériaux (sable par exemple). Cette dissymétrie peut être obtenue soit en utilisant des parties inclinées à inclinaison différentes , soit en utilisant des parties inclinées de longueurs différentes.

Sur la figure 3 on a représenté, en coupe longitudinale, un autre mode de réalisation d'une caisse à fond mobile. La disposition générale de la caisse, de son fond et de la bande est la même mais on utilise une bande sans fin qui tourne autour des deux rouleaux 4 et 5

On notera cependant que dans ce mode de mise en oeuvre on a à faire face à des problèmes techniques nouveaux qui sont :

- d'une part, la possibilité d'entrainement de la bande, d'autre part, la nécessité de guider la bande pendant son trajet ; pour résoudre cette dernière difficulté , il est par exemple envisageable de disposer d'une bande portant sur la face inférieure (celle qui est en contact avec le fond de la caisse) une ou plusieurs surépaisseur qui viendront s'insérer dans des déooupes correspondantes ménagées dans le fond de la caisse.

La figure 4 représente schématiquement une solution selon l'invention pour la réalisation de la partie inférieure des parois latérales de la caisse à fond mobile.

Sur cette figure on voit :

- en 9 la partie inclinée de la face latérale de la caisse ; cette partie 9(qui est renforcée et soutenue sur sa face extérieure par un renfort en équerre) est prolongée vers le bas par une petite partie verticale 10, qui peut elle-même être repliée vers l'extérieur de la caisse comme on le voit en 11 ;

- en 3 le fond de la caisse dont l'extrémité latérale est relevée ; sur ce fond 3 repose la bande transporteuse 12.

- en 13 on a fixé, sur la partie verticale 10 de la face latérale, une plaque mince en une matière plastique résistante ; cette plaque délimite vers l'intérieur de la caisse la surface utile de ladite caisse ; ainsi la bande transporteuse 12 déborde de part et d'autre de cette surface utile.

La partie basse latérale extérieure de la caisse délimitée par la partie inclinée de la face latérale (ou l'équerre de renforcement ) la partie verticale basse de ladite face latérale et le fond de la caisse relevé à son extrémité, est ouverte de façon à pouvoir éventuellement être nettoyée.

La figure 5 représente , en coupe et schématiquement, une solution de vérin selon l'invention. Le vérin, disposé dans la partie basse de la paroi latérale de la caisse, est, dans cet exemple, constitué par un tube creux 14 s'étendant sur tout ou partie de la longueur de la caisse. Lorsque ce tube est alimenté en air sous pression, il fait pression sur le bord de la face supérieure de la bande et appuie cette bande contre le fond de la caisse. Grâce à ce moyen on maintient la bande en place quel que soit le chargement de la caisse et on complète l'étanchéité entre l'intérieur et l'extérieur de la caisse. Bien évidemment lorsque la bande est mise en mouvement pour le déchargement (ou le chargement) de la caisse, le tube 14 est dégonflé.

La figure 6 représente en coupe le mode de fixation selon l'invention de la bande sur un rouleau, ce schéma montre une coupe transversale du rouleau.

On a représenté en 4 le rouleau (ou tambour d'enroulement ) ; ce rouleau qui, a la forme d'un cylindre a subi une découpe tout au long d'une génératrice ; cette découpe présente un bord 15 disposé selon un plan radian et une partie arrondie 16 formant rattrapage progressif avec la surface circulaire du cylindre ; la contre plaque 17 présente elle-même une face extérieure 18 pouvant, après fixation de ladite contreplaque sur le cylindre, dans le prolongement de la surface circulaire du cylindre ; la fixation de la contreplaque s'effectue au moyen de vis qui serrent cette contreplaque contre le cylindre ; grâce à ce serrage l'extrémité de la bande 12 est maintenue solidement en place.

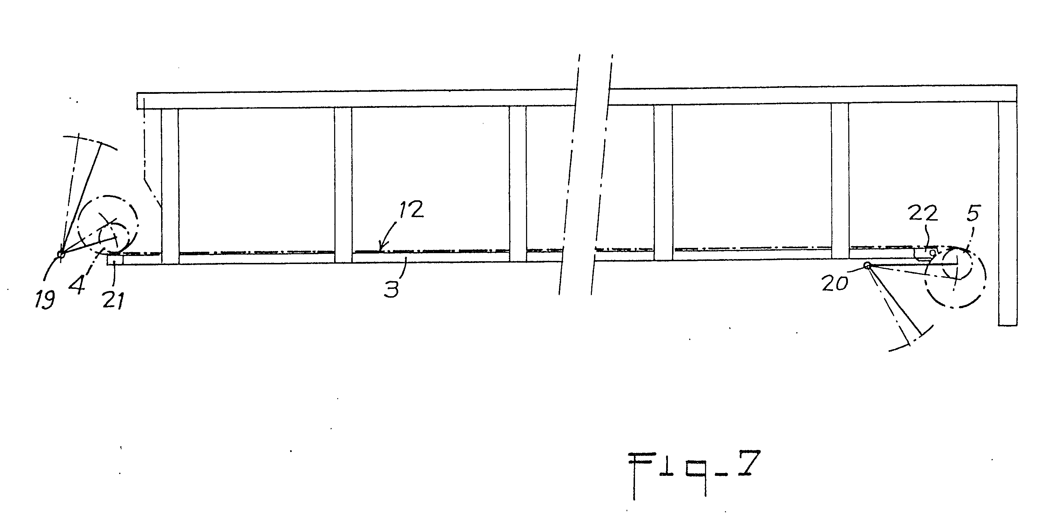

La figure 7 représente schématiquement une coupe longitudinale d'une caisse montrant les mouvements verticaux possibles des rouleaux autour desquels la bande s'enroule.

On a schématisé en 4 le rouleau avant et en 5 le rouleau arrière ; en 12 la bande qui repose sur la face plane 3 formant le fond de la caisse.

Selon l'invention l'axe horizontal du rouleau 4 peut pivoter autour d'un axe 19 et l'axe horizontal du rouleau 5 peut pivoter autour d'un axe 20. Deux pièces 21 et 22 fixées sur le fond de la caisse formeront buté en ce sens qu'elles seront en contact avec la surface extérieure de la bande enroulée autour des rouleaux 4 et 5. Grâce à ce système tout effort de traction exercé sur la bande sera réalisé sans que la bande subisse de changement de direction (préjudicia- ble à sa solidité).

0027409

-14-

## REVENDICATIONS

1. Caisse dont le fond mobile est constitué par une bande transporteuse souple, s'appuyant sur le fond de ladite caisse, qui grâce à un déplacement longitudinal par rapport à ce fond permet un déplacement, par rapport à la caisse du matériau qui repose sur ladite bande, caractérisée en ce qu'en vue notamment d'assurer une certaine étanchéité entre l'intérieur et l'extérieur de la caisse, la partie inférieure des parois longitudinales de la caisse comporte, au bas d'une partie inclinée (9) une petite face verticale (10) sur laquelle est fixée une plaque mince (13) en une matière plastique résistante et que ladite bande s'étend vers l'extérieur du fond de la caisse au-delà de ladite plaque mince (13).

2. Caisse à fond mobile selon la revendication 1, caractérisée en ce que, en vue d'assurer un maintien de ladite bande on dispose à la partie inférieure des parois longitudinales de la caisse au moins un vérin, que l'on peut commander à volonté , et qui applique le bord de la bande contre un support mécaniquement résistant.

3. Caisse à fond mobile selon la revendication 2, caractérisée en ce que ledit vérin est constitué par un tube en caoutchouc que l'on peut gonfler avec de l'air.

4. Caisse à fond mobile selon l'une des revendications 1 à 3, caractérisée en ce que ladite bande transporteuse se déplace par enroulement autour de rouleaux disposés aux extrémités de la caisse et est constituée d'un tissu de préférence en polyester enduit sur une face avec un polymère à faible coefficient de frottement et sur l'autre face avec un matériau polymère résistant , ladite bande ayant une épaisseur inférieure à 5 mm.

5. Caisse à fond mobile selon la revendication 4, caractérisée en ce que chaque extrémité de ladite bande est fixée sur chaque rouleau dans un décrochement ménagé dans ledit rouleau et par serrage de ladite bande, dans ledit décrochement, entre une contreplaque et ledit rouleau.

6. Caisse à fond mobile selon l'une des revendications 4 et 5, caractérisée en ce que chaque rouleau est monté de façon à ce que la distance entre l'axe dudit rouleau et le plan du fond de la caisse soit variable en fonction de l'épaisseur de l'enroulement autour dudit rouleau.

Fig.1

Fig.2

FIG-3

FIG-4

Fig. 5

14

Fig. 6

12    18  17    15

16    4

Fig-7

4/4

0027409

**Office européen des brevets**

**RAPPORT DE RECHERCHE EUROPEENNE**

Numéro de la demande

EP 80 40 1416

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| X | US - A - 3 593 864 (MOSER)<br>* Figure 2, colonne 2, lignes 59-68 *<br>-- | 1 | B 60 P 1/38 |
| | US - A - 2 595 395 (LAUELLE)<br>* En entier *<br>-- | 4 | |
| | FR - A - 822 189 (BROMILOW)<br>* Page 1, lignes 9-27 *<br>-- | 4 | DOMAINES TECHNIQUES RECHERCHES (Int. Cl. 3) |
| | FR - A - 2 149 426 (GOODRICH)<br>* En entier *<br>-- | 1 | B 60 P<br>A 01 C<br>A 01 D |
| A | FR - A - 550 077 (GAUCHER) | 1 | |
| A | US - A - 3 724 692 (HOLLAND)<br>& FR - A - 2 059 628 | 1 | |
| A | GB - A - 1 053 595 (WHITTAKER)<br>---- | 1 | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 08-01-1981 | SCHMITTER |

OEB Form 1503.1 06.78